# EUROPEAN PATENT APPLICATION

(11) **EP 4 432 077 A1**
(43) Date of publication of application: **18.09.2024**
(21) Application number: 22918951.9
(22) Date of filing: 17.05.2022
(51) Int. Cl.: G06F 9/38, G06F 9/30, G06F 9/50, G06F 9/28

(54) **THREAD ALLOCATION METHOD, THREAD ALLOCATION DEVICE, AND COMPUTER READABLE RECORDING MEDIUM**

(30) Priority: 07.01.2022 KR 20220002525
(71) Applicant: Ulsan National Institute of Science and Technology (UNIST), Eonyang-eup Ulju-gun Ulsan 44919 (KR)
(72) Inventor: BAEK, Woongki, Ulju-gun Ulsan 44919 (KR); PARK, Jinsu, Ulju-gun Ulsan 44919 (KR); PARK, Seongbeom, Ulju-gun Ulsan 44919 (KR); HAN, Myeonggyun, Ulju-gun Ulsan 44919 (KR)
(74) Representative: BCKIP Part mbB
(86) International application number: PCT/KR2022/007074
(87) International publication number: WO 2023/132414

(57) **Abstract**

There is provided a thread allocation method configured to generate a plurality of thread groups based on a number of active processing cores; determine a number of threads to be allocated to each thread group among a plurality of threads based on a computation capacity per each thread; allocate at least one thread to the respective thread groups based on a priority of each threads and the determined number of threads; and allocate each thread group to each active processing core.

## Description

### [Technical Field]

The present disclosure relates to a thread allocation method, and more specifically, to a method of allocating threads to multiple cores included in a computing device.

### [Background Art]

In the conventional thread allocation technique, computational resources may be allocated to be unbalanced to threads allocated to cores, or hardware resources between threads may conflict.

For example, conventionally, when the number of cores is not a divisor of the number of threads, a greater number of threads are allocated to some cores than to other cores, seriously degrading core performance. Additionally, as the number of cores increases, a resource imbalance between threads increases, resulting in greater performance degradation.

Moreover, in the case of heterogeneous cores, there is a problem in that thread allocation may be performed without considering the performance difference between heterogeneous cores.

### [Disclosure]

### [Technical Problem]

An object of the present disclosure is to provide a thread allocation method of generating a thread group to correspond to an active core among a plurality of cores included in a computing device, and allocating threads to the active core through the generated thread group.

### [Technical Solution]

In accordance with an aspect of the present disclosure, there is provided a thread allocation method, the method comprises: generating a plurality of thread groups based on a number of active processing cores among a plurality of processing cores included in a computing device; determining a number of threads to be allocated to each thread group among a plurality of threads to be executed in a current period based on a computation capacity per each thread of the plurality of thread groups; allocating at least one thread to the respective thread groups based on a priority of each threads and the number of threads to be allocated to each thread group; and allocating each thread group to each active processing core.

Also, the determining of the number of threads may include initializing the number of threads to be allocated to each thread group, and increasing the number of threads to be allocated to each thread group in order of the computation capacity per each thread order being larger.

Also, the increasing of the number of threads may be repeated until all threads are allocated to the respective thread groups.

Also, the allocating of at least one thread may include calculating the computation capacity per each thread on the basis of the number of threads to be allocated to each thread group, sorting the plurality of thread groups based on the computation capacity per each thread, and allocating the at least one thread to the respective thread groups according to the sorted order.

Also, the allocating of the at least one thread may include determining a priority for each thread based on the at least one of a computing resource previously assigned to each thread and a thread ID.

Also, the priority may be higher as the number of resources previously assigned decreases, and may be determined higher as the value of the thread ID decreases.

Also, the allocating of each thread group may include selecting a thread group having the largest computation capacity per each thread among at least one unallocated thread group, calculating a migration cost of the selected thread group for each unallocated active processing core based on a processing core allocation record of at least one thread included in the selected thread group, and allocating the selected thread group to an active processing core having the lowest calculated migration cost.

Also, the calculating of the migration cost may include calculating the migration cost based on a first cost for migration between different processors and a second cost for migration between different processing cores, and wherein a weight of the first cost may be set greater than a weight of the second cost.

Also, the method may further comprise setting a scheduling period such that each thread group is allocated to each active processing cores.

Also, the setting of the scheduling period may include obtaining performance data for the plurality of threads, and adjusting the scheduling period on the basis of the performance data.

In accordance with an aspect of the present disclosure, there is provided a thread allocation device, the device comprises: active processing cores among a plurality of processing cores included in a computing device; a setting unit configured to determine a number of threads to be allocated to each thread group among a plurality of threads to be executed in a current period based on a computation capacity per each thread of the plurality of thread groups; a thread allocation unit configured to allocate at least one thread to the respective thread groups based on a priority of each threads and the number of threads to be allocated to each thread group; and a group allocation unit configured to allocate each thread group to each active processing core.

Also, the setting unit may initialize the number of threads to be allocated to each thread group, and increases the number of threads to be allocated to each thread group in order of largest to smallest computation capacity per each thread.

Also, the thread allocation unit may calculate the computation capacity per each thread on the basis of the number of threads to be allocated to each thread group, sorts the plurality of thread groups on the basis of the computation capacity per each thread, and allocate the at least one thread to the respective thread groups according to the sorted order.

Also, the thread group allocation unit may select a thread group having the largest computation capacity per each thread among at least one unallocated thread group, calculate a migration cost of the selected thread group for each unallocated active processing core based on a processing core allocation record of at least one thread included in the selected thread group, and allocate the selected thread group to an active processing core having the lowest calculated migration cost.

Also, the device may further comprise a scheduling unit configured to set a scheduling period such that each thread group is allocated to each active processing core.

In accordance with another aspect of the present disclosure, there is provided a non-transitory computer-readable recording medium storing a computer program, which comprises instructions for a processor to perform a thread allocation method, the method comprise: generating a plurality of thread groups based on a number of active processing cores among a plurality of processing cores included in a computing device; determining a number of threads to be allocated to each thread group among a plurality of threads to be executed in a current period based on a computation capacity per each thread of the plurality of thread groups; allocating at least one thread to the respective thread groups based on a priority of each threads and the number of threads to be allocated to each thread group; and allocating each thread group to each active processing core.

In accordance with another aspect of the present disclosure, there is provided a computer program stored in a non-transitory computer-readable recording medium, which comprises instructions for a processor to perform a thread allocation method, the method comprises: generating a plurality of thread groups based on a number of active processing cores among a plurality of processing cores included in a computing device; determining a number of threads to be allocated to each thread group among a plurality of threads to be executed in a current period based on a computation capacity per each thread of the plurality of thread groups; allocating at least one thread to the respective thread groups based on a priority of each threads and the number of threads to be allocated to each thread group; and allocating each thread group to each active processing core.

### [Advantageous Effects]

According to one aspect of the present disclosure described above, by providing the thread allocation method, a thread group is generated to correspond to the active core among the plurality of cores included in the computing device, and threads are allocated to the active core through the generated thread group.

### [Description of Drawings]

FIG. 1 is a block diagram of a thread allocation device according to one embodiment of the present disclosure.
FIG. 2 is a diagram illustrating one embodiment of a thread group generated by a generation unit of FIG. 1.
FIGS. 3 to 6 are diagrams illustrating one embodiment of a process for determining the number of threads to be allocated by a setting unit of FIG. 1.
FIGS. 7 and 8 are diagrams illustrating one embodiment of a process for allocating a thread to the thread group by a thread allocation unit of FIG. 1.
FIG. 9 is a diagram illustrating one embodiment of a process for allocating the thread group to an active core by a group allocation unit of FIG. 1.
FIG. 10 is a flowchart of a thread allocation method according to one embodiment of the present disclosure.

### [Mode for Disclosure]

The advantages and features of the embodiments and the methods of accomplishing the embodiments will be clearly understood from the following description taken in conjunction with the accompanying drawings. However, embodiments are not limited to those embodiments described, as embodiments may be implemented in various forms. It should be noted that the present embodiments are provided to make a full disclosure and also to allow those skilled in the art to know the full range of the embodiments. Therefore, the embodiments are to be defined only by the scope of the appended claims.

In the embodiments of the present invention, detailed descriptions of functions or configurations may be omitted if it is deemed that such detailed descriptions unnecessarily obscure the essence of the present invention. Furthermore, in terms used in the present disclosure, general terms currently as widely used as possible while considering functions in the present disclosure are used. However, the terms may vary according to the intention or precedent of a technician working in the field, the emergence of new technologies, and the like. In addition, in certain cases, there are terms arbitrarily selected by the applicant, and in this case, the meaning of the terms will be described in detail in the description of the corresponding invention. Therefore, the terms used in the present disclosure should be defined based on the meaning of the terms and the overall contents of the present disclosure, not just the name of the terms.

Hereinafter, preferred embodiments of the present disclosure will be described in detail with reference to the attached drawings.

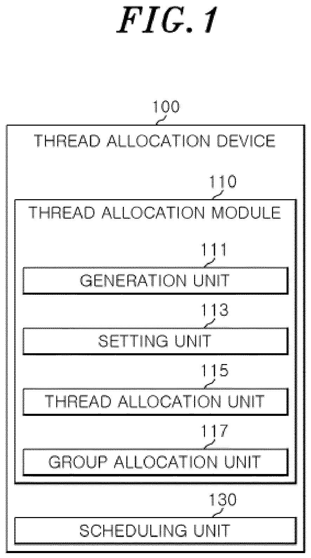

FIG. 1 is a block diagram of a thread allocation device according to one embodiment of the present disclosure.

Referring to FIG. 1, the thread allocation device 100 may include a thread allocation module 110 and a scheduling unit 130.

In this case, the thread allocation module 110 may include a generation unit 111, a setting unit 113, a thread allocation unit 115, and a group allocation unit 117.

The generation unit 111 may create a plurality of thread groups on the basis of the number of active cores of a plurality of cores included in a computing device.

Here, the computing device includes one or more processors such as a Central Processing Unit (CPU), Graphic Processing Unit (GPU), and Network Processing Unit (NPU), and each processor may include multiple cores.

Accordingly, when the application program stored in the memory is executed, the computing device can allocate threads for the application program to a plurality of active cores of the plurality of cores so that operations on the application program can be performed.

In this case, at least one thread is allocated to each active core to perform operations on the application program.

The setting unit 113 may determine the number of threads to be allocated to each of the plurality of thread groups of the plurality of threads to be executed in a current period on the basis of the computation capacity per thread of each of the plurality of thread groups.

Here, the computation capacity per thread may be a computation capacity for at least one thread to be allocated to the thread group. For this purpose, the computation capacity per thread may be calculated from a computation capacity of the thread group on the basis of the number of threads to be allocated to the thread group. For example, the computation capacity per thread may be the computation capacity of the thread group divided by the number of threads to be allocated to the thread group.

In this case, the computation capacity can be set to correspond to the computation capacity of the active core. In one embodiment, the computation capacity may be set on the basis of the type of active core.

Accordingly, the setting unit 113 may initialize the number of threads to be allocated to each of the plurality of thread groups.

Accordingly, the setting unit 113 may increase the number of threads to be allocated to each of the plurality of thread groups in the order of largest to smallest computation capacity per thread.

In this regard, the setting unit 113 may repeat the process of increasing the number of threads to be allocated to each of the plurality of thread groups until all of the plurality of threads are allocated to each of the plurality of thread groups.

Meanwhile, the period is a scheduling period, which may be a time interval during which a thread group allocated to an active core performs operations for an application program. For this purpose, the period can be set by scheduling unit (130). The process by which the scheduling unit 130 sets the scheduling period will be described in detail below.

The thread allocation unit 115 may allocate at least one thread to each of the plurality of thread groups on the basis of a priority of each of the plurality of threads and the number determined above.

In this case, the number determined above may be the number of threads to be allocated to each of the plurality of thread groups. Moreover, the priority may be set on the basis of at least one of a resource previously assigned to each of the plurality of threads and a thread ID.

Here, the resource is a computation capacity given to each thread, and the thread ID may be a unique number given to each thread. Accordingly, in one embodiment, the priority may be set higher as the number of the resources assigned previously decreases, and may be set higher as the thread ID value decreases.

Meanwhile, the thread allocation unit 115 may calculate the computation capacity per thread of each of the plurality of thread groups on the basis of the number of threads to be allocated to each of the plurality of thread groups.

Here, the computation capacity per thread may be the computation capacity for each of at least one thread scheduled to be allocated to the thread group. For this purpose, the computation capacity per thread may be calculated from the computation capacity of the thread group on the basis of the number of threads scheduled to be allocated to the thread group.

For example, the computation capacity per thread may be a value obtained by dividing the computation capacity of the thread group by the number of threads scheduled to be allocated to the thread group.

Accordingly, the thread allocation unit 115 may sort the plurality of thread groups on the basis of computation capacity per thread and allocate at least one thread to each of the plurality of thread groups according to the sorted order.

In this case, the thread allocation unit 115 may first sort the thread group with the smaller ID value assigned to the thread group of the plurality of thread groups with the same computation capacity per thread.

Accordingly, the thread allocation unit 115 may allocate at least one thread to the plurality of sorted thread groups according to the priority. In this case, the thread allocation unit 115 may allocate the thread by the number of threads determined by the setting unit 113 to each thread group.

The group allocation unit 117 may allocate each of the plurality of thread groups to each active core.

To this end, the group allocation unit 117 may allocate the thread groups to the active cores on the basis of the computation capacity per thread and the migration cost for each of the plurality of thread groups.

In this case, the migration cost may be calculated on the basis of a core allocation record for each thread. Here, the core allocation record may record the core to which the thread is allocated in the previous scheduling period.

Therefore, the migration cost may occur when the thread is allocated to a second core that is different from a first core to which the thread is allocated in the previous scheduling period. In this case, when the second core is included in the same processor as the first core, a smaller migration cost may occur than when the second core is included in a different processor from the first core.

In other words, the group allocation unit 117 may calculate the migration cost on the basis of a first cost for migration between different processors and a second cost for migration between different cores. In this case, the group allocation unit 117 may calculate the migration cost by assigning a greater weight to the first cost than to the second cost.

In one embodiment, the migration cost of one thread group for one active core may be the sum of the migration costs that occur when each of at least one thread allocated to the thread group is allocated to the active core.

Accordingly, the group allocation unit 117 may allocate each of a plurality of thread groups to each of a plurality of active cores according to one embodiment as follows.

In one embodiment, the group allocation unit 117 may select a thread group having the largest computation capacity per thread of at least one unallocated thread group to the active core.

Accordingly, the group allocation unit 117 may calculate the migration cost of the selected thread group for each unallocated active core on the basis of the core allocation record of each of at least one thread included in the selected thread group.

In this case, the group allocation unit 117 may allocate the selected thread group to the active core having the lowest calculated migration cost.

In this regard, the group allocation unit 117 may repeat the process of selecting the thread group, calculating the migration cost, and allocating the thread group to the active core until the unallocated thread group does not exist in the active core.

Meanwhile, the scheduling unit 130 may set the scheduling period so that each of the plurality of thread groups is allocated to each active core. In one embodiment, the scheduling unit 130 may set the initial scheduling period to a preset minimum period (for example, 0.125 ms) when the application program is executed.

Accordingly, the scheduling unit 130 may obtain performance data for the plurality of threads and adjust the scheduling period on the basis of the obtained performance data.

In one embodiment, the scheduling unit 130 may double the scheduling period when new performance data appears to be higher than previous performance data. Moreover, when new performance data appears to be lower than previous performance data, the scheduling unit 130 may fix the scheduling period to the previous scheduling period until the application program is terminated. In this case, the scheduling unit 130 may record a fixed scheduling period for the application program and may allocate threads according to the recorded scheduling period when the application program is re-executed.

Meanwhile, in one embodiment, the scheduling unit 130 may obtain performance data from a performance monitoring device. To this end, the performance monitoring device may request a signal at preset periods for the application program executed by the computing device.

Accordingly, the performance monitoring device may request signals at a certain period and generate the performance data on the basis of the interval between signals received from the computing device.

For example, a performance monitoring device may generate performance data to indicate higher performance as the interval between received signals becomes shorter, and generate performance data to indicate lower performance as the interval becomes longer.

In one embodiment, the performance monitoring device may receive heartbeat signals from the computing device at a certain period.

Here, the heartbeat signal may be a signal transmitted by any device to maintain connection to a specific network. In this case, conventionally known technology can be used to generate the heartbeat signal.

Accordingly, the performance monitoring device may generate performance data to indicate higher performance as the interval between the heartbeat signals becomes shorter, and generate the performance data to indicate lower performance as the interval becomes longer.

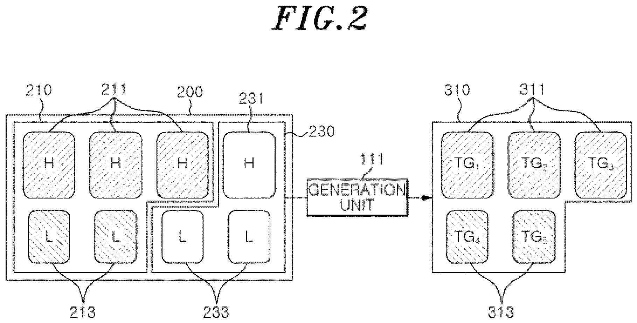

FIG. 2 is a diagram illustrating one embodiment of the thread group generated in the generation unit of FIG. 1.

Referring to FIG. 2, a plurality of cores 210 and 230 included in the processor and a plurality of thread groups 310 generated by a generation unit 111 can be seen.

In this way, the plurality of thread groups 310 may be generated to correspond to the plurality of active cores 210. In this case, the number of thread groups 310 may be generated equal to the number of active cores 210. Moreover, the thread group 310 may be generated with the same type as the active core 210.

In one embodiment, when three high-performance active cores 211 (H) and two low-performance active cores 213 (L) are set, the generation unit 111 may generate three high-performance thread groups (311, TG1 to TG3) and two low-performance thread groups (313, TG4 and TG5).

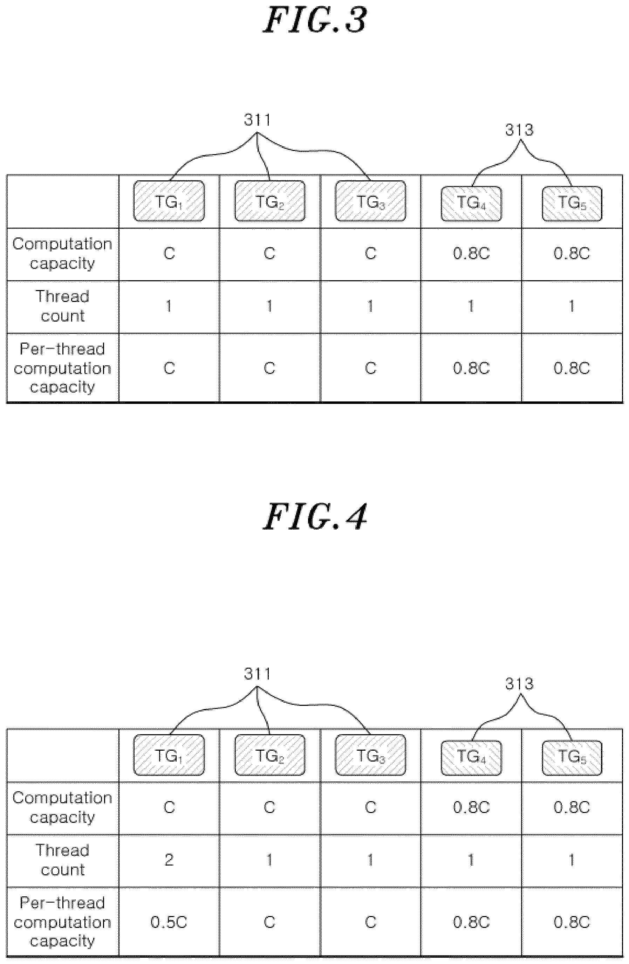

FIGS. 3 to 6 are diagrams illustrating one embodiment of a process for determining the number of threads to allocate in the setting unit of FIG. 1.

Referring to FIG. 3, the computation capacity of each of the plurality of thread groups 310, the number of threads predicted to be allocated to each of the plurality of thread groups 310, and the computation capacity per thread can be seen.

In this case, the computation capacity of the high-performance thread groups (311, TG1 to TG3) may each be set to C, and the computation capacity of the low-performance thread groups (313, TG4 and TG5) may be set to 0.8C.

In this regard, it can be seen that immediately after each of the plurality of thread groups 310 is generated, the number of threads expected to be allocated to each of the plurality of thread groups 310 is initialized to 1.

Accordingly, the setting unit 113 may increase the number of threads to be allocated to the first high-performance thread group 311 (TG1) according to the order of the computation capacity per thread being larger.

Referring to FIG. 4, it can be seen that the number of threads to be allocated to the first high-performance thread group (311, TG1) has increased.

Accordingly, the computation capacity per thread for the first high-performance thread group (311, TG1) may be predicted to be 0.5C.

Next, the setting unit 113 may increase the number of threads to be allocated to the second high-performance thread group 311 (TG2) according to the order of the computation capacity per thread being larger.

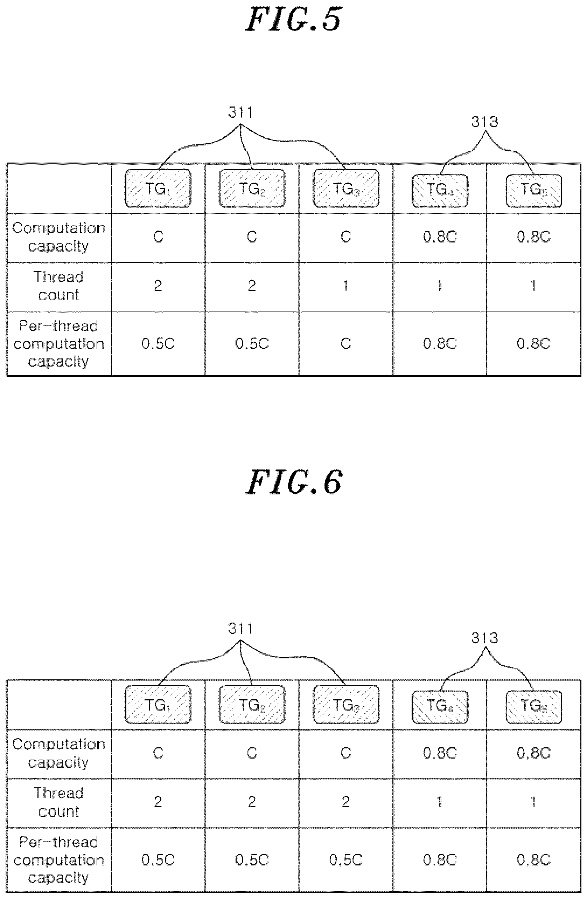

Referring to FIG. 5, it can be seen that the number of threads to be allocated to the second high-performance thread group (311, TG2) has increased.

Accordingly, the computation capacity per thread for the second high-performance thread group (311, TG2) can be predicted to be 0. 5C.

Next, the setting unit 113 may increase the number of threads to be allocated to the third high-performance thread group (311, TG3) according to the order of the computation capacity per thread being larger.

Referring to FIG. 6, it can be seen that the number of threads to be allocated to the third high-performance thread group (311, TG3) has increased.

Accordingly, the computation capacity per thread for the third high-performance thread group (311, TG3) may be predicted to be 0.5C.

At this time, when the number of threads to be executed in the current period is 8, the setting unit 113 may terminate the process of increasing the number of threads to be allocated to each of the multiple thread groups 310 in the current state.

In other words, the setting unit 113 may determine the number of threads to be allocated for each of the high-performance thread groups (311, TG1 to TG3) to two and the number of threads to be allocated to each of the low-performance thread groups (313, TG4 to TG5) to 1.

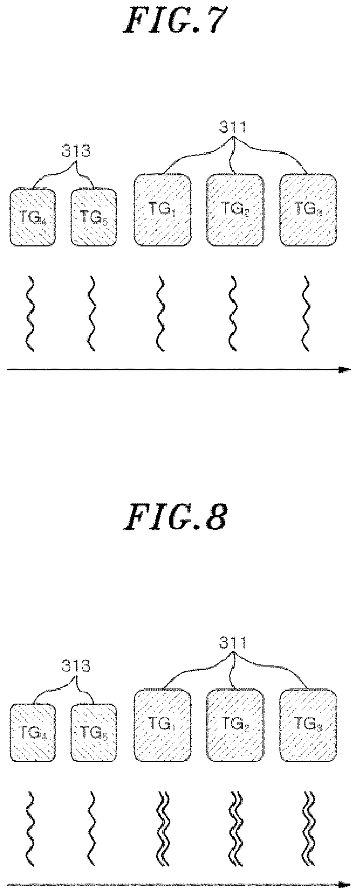

FIGS. 7 and 8 are diagrams illustrating one embodiment of a process for allocating the thread to the thread group by the thread allocation unit of FIG. 1.

Referring to FIG. 7, it can be seen that the sorted thread group 310 and the plurality of threads arranged in an arrow direction on the basis of the priority. In this case, the plurality of threads are shaped as waves.

Referring further to FIG. 6, it can be seen that each of the low-performance thread groups (313, TG4 to TG5) for which a computation capacity per thread greater than the computation capacity per thread for each of the high-performance thread groups (311, TG1 to TG3) is calculated is sorted first.

Moreover, when the computation capacity per thread is the same, it can be seen that the thread group with the smaller thread group ID value is sorted first.

Referring to FIG. 8, it can be seen that at least one thread according to priority is allocated to the plurality of sorted thread groups.

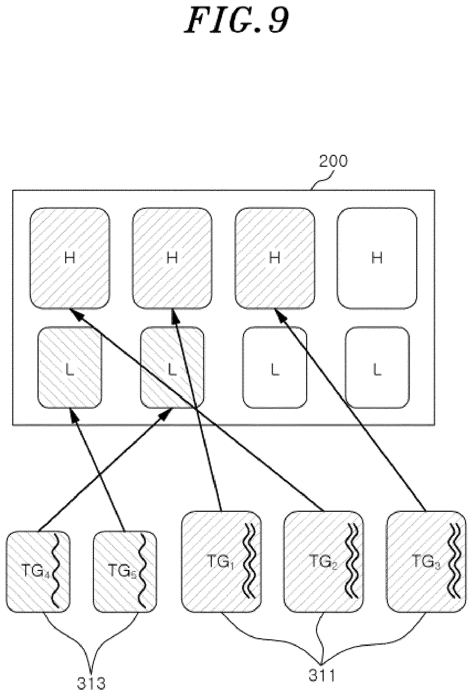

FIG. 9 is a diagram illustrating one embodiment of a process for allocating the thread group to the active core in the group allocation unit of FIG. 1.

Referring to FIG. 9, it can be seen that each of the plurality of thread groups 310 is allocated to each of the plurality of active cores 210.

In this case, it can be understood that each of the plurality of thread groups 310 is allocated to each of the plurality of active cores 210 on the basis of the computation capacity per thread for each of the plurality of thread groups and the migration cost.

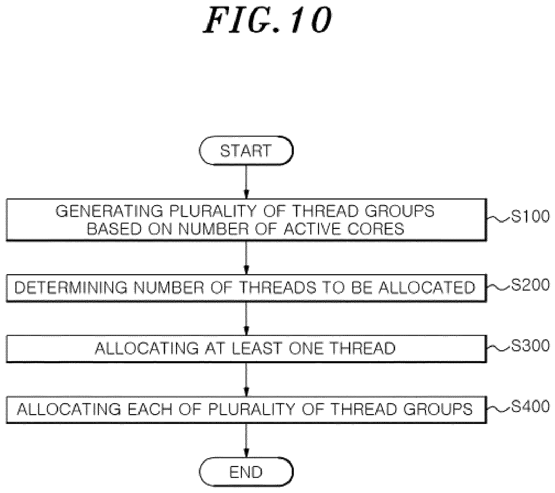

FIG. 10 is a flowchart of a thread allocation method according to one embodiment of the present disclosure.

Referring to FIG. 10, the generation unit 111 may generate the plurality of thread groups 310 on the basis of the number of active cores 210 of the plurality of cores included in the computing device (S 100).

In this case, the setting unit 113 determines the number of threads to be allocated to each of the plurality of thread groups 310 of the plurality of threads to be executed in the current period on the basis of the computation capacity per thread of each of the plurality of thread groups 310.

Accordingly, the thread allocation unit 115 may allocate at least one thread to each of the plurality of thread groups 310 on the basis of the priority of each of the plurality of threads and the number determined above (S300).

Through this, the group allocation unit 117 may allocate each of the plurality of thread groups 310 to each of the active cores 210 (S400).

The various embodiments disclosed may be implemented as software (e.g., programs) including instructions stored on a computer-readable storage medium (e.g., memory (internal memory or external memory)) that may be read by a machine (e.g., a computer). The machine may include electronic devices (e.g., devices) according to the disclosed embodiments, capable of invoking instructions stored on the storage medium and performing operations according to the invoked instructions. When the instructions are executed by a processor (e.g., a processor), the processor, either directly or using other components under the control of the processor, can perform functions corresponding to the instructions. The instructions may include code generated or executed by a compiler or interpreter. The computer -readable storage medium may be provided in the form of a non-transitory storage medium. Here, 'non-transitory' means that the storage medium does not include signals and is tangible, without distinguishing between whether the data is stored on the storage medium permanently or temporarily.

According to one embodiment, methods according to the various embodiments disclosed herein may be included and provided as a computer program product.

The above description is merely exemplary description of the technical scope of the present disclosure, and it will be understood by those skilled in the art that various changes and modifications can be made without departing from original characteristics of the present disclosure. Therefore, the embodiments disclosed in the present disclosure are intended to explain, not to limit, the technical scope of the present disclosure, and the technical scope of the present disclosure is not limited by the embodiments. The protection scope of the present disclosure should be interpreted based on the following claims and it should be appreciated that all technical scopes included within a range equivalent thereto are included in the protection scope of the present disclosure.

## Claims

1. A thread allocation method comprising:
generating a plurality of thread groups based on a number of active processing cores among a plurality of processing cores included in a computing device;
determining a number of threads to be allocated to each thread group among a plurality of threads to be executed in a current period based on a computation capacity per each thread of the plurality of thread groups;
allocating at least one thread to the respective thread groups based on a priority of each threads and the number of threads to be allocated to each thread group; and
allocating each thread group to each active processing core.

2. The thread allocation method of claim 1, wherein the determining of the number of threads includes:
initializing the number of threads to be allocated to each thread group, and
increasing the number of threads to be allocated to each thread group in order of the computation capacity per each thread order being larger.

3. The thread allocation method of claim 2, wherein the increasing of the number of threads is repeated until all threads are allocated to the respective thread groups.

4. The thread allocation method of claim 1, wherein the allocating of at least one thread includes:
calculating the computation capacity per each thread on the basis of the number of threads to be allocated to each thread group,
sorting the plurality of thread groups based on the computation capacity per each thread, and
allocating the at least one thread to the respective thread groups according to the sorted order.

5. The thread allocation method of claim 4, wherein the allocating of the at least one thread includes determining a priority for each thread based on the at least one of a computing resource previously assigned to each thread and a thread ID.

6. The thread allocation method of claim 5, wherein the priority is determined higher as the number of resources previously assigned decreases, and is determined higher as the value of the thread ID decreases.

7. The thread allocation method of claim 1, wherein the allocating of each thread group includes:
selecting a thread group having the largest computation capacity per each thread among at least one unallocated thread group,
calculating a migration cost of the selected thread group for each unallocated active processing core based on a processing core allocation record of at least one thread included in the selected thread group, and
allocating the selected thread group to an active processing core having the lowest calculated migration cost.

8. The thread allocation method of claim 7, wherein the calculating of the migration cost includes calculating the migration cost based on a first cost for migration between different processors and a second cost for migration between different processing cores, and wherein a weight of the first cost is set greater than a weight of the second cost.

9. The thread allocation method of claim 1, further comprising setting a scheduling period such that each thread group is allocated to each active processing core.

10. The thread allocation method of claim 9, wherein the setting of the scheduling period includes:
obtaining performance data for the plurality of threads, and
adjusting the scheduling period on the basis of the performance data.

11. A thread allocation device comprising:
a generation unit configured to generate a plurality of thread groups based on a number of active processing cores among a plurality of processing cores included in a computing device;
a setting unit configured to determine a number of threads to be allocated to each thread group among a plurality of threads to be executed in a current period based on a computation capacity per each thread of the plurality of thread groups;
a thread allocation unit configured to allocate at least one thread to the respective thread groups based on a priority of each threads and the number of threads to be allocated to each thread group; and
a group allocation unit configured to allocate each thread group to each active processing core.

12. The thread allocation device of claim 11, wherein the setting unit initializes the number of threads to be allocated to each thread group, and increases the number of threads to be allocated to each thread group in order of largest to smallest computation capacity per each thread.

13. The thread allocation device of claim 11, wherein the thread allocation unit calculates the computation capacity per each thread on the basis of the number of threads to be allocated to each thread group, sorts the plurality of thread groups on the basis of the computation capacity per each thread, and allocates the at least one thread to the respective thread groups according to the sorted order.

14. The thread allocation device of claim 11, wherein the thread group allocation unit selects a thread group having the largest computation capacity per each thread among at least one unallocated thread group, calculates a migration cost of the selected thread group for each unallocated active processing core based on a processing core allocation record of at least one thread included in the selected thread group, and allocates the selected thread group to an active processing core having the lowest calculated migration cost.

15. The thread allocation device of claim 11, further comprising a scheduling unit configured to set a scheduling period such that each thread group is allocated to each active processing core.

16. A non-transitory computer readable storage medium storing computer executable instructions, wherein the instructions, when executed by a processor, cause the processor to perform a thread allocation method, the method comprising:
generating a plurality of thread groups based on a number of active processing cores among a plurality of processing cores included in a computing device;
determining a number of threads to be allocated to each thread group among a plurality of threads to be executed in a current period based on a computation capacity per each thread of the plurality of thread groups;
allocating at least one thread to the respective thread groups based on a priority of each threads and the number of threads to be allocated to each thread group; and
allocating each thread group to each active processing core.
